# EUROPÄISCHE PATENTSCHRIFT

(11) **EP 2 591 257 B1**
(45) Veröffentlichungstag und Bekanntmachung des Hinweises auf die Patenterteilung: **10.09.2014**
(21) Anmeldenummer: 11729922.2
(22) Anmeldetag: 04.07.2011
(51) Int. Cl.: F16K 31/06

(54) **ELEKTROMAGNETISCHES VENTIL FÜR EINEN DRUCKBEHÄLTER**
ELECTROMAGNETIC VALVE FOR A PRESSURE CONTAINER
SOUPAPE ÉLECTROMAGNÉTIQUE POUR UN RÉCIPIENT SOUS PRESSION

(30) Priorität: 08.07.2010 DE 102010026548
(43) Veröffentlichungstag der Anmeldung: 15.05.2013
(73) Patentinhaber: Magna Steyr Fahrzeugtechnik AG & Co. KG, 8041 Graz (AT)
(72) Erfinder: ZIEGER, Andreas, 8321 Hofstätten an der Raab (AT)
(74) Vertreter: Rausch, Gabriele
(86) Internationale Anmeldenummer: PCT/EP2011/003306
(87) Internationale Veröffentlichungsnummer: WO 2012/003952

(56) Entgegenhaltungen:
- EP-A1- 0 753 695
- FR-A1- 2 563 890
- US-A- 4 286 768

## Beschreibung

Die vorliegende Erfindung betrifft ein elektromagnetisches Ventil für einen Druckbehälter gemäß dem Oberbegriff des Anspruchs 1 sowie ein Verfahren zum Betreiben eines elektromagnetischen Ventils an einem Druckbehälter gemäß dem Oberbegriff des Anspruchs 11 und einen Druckbehälter insbesondere einen Compositebehälter.

Ein Druckbehälter zur Speicherung von flüssigen oder gasförmigen Medien, vorzugsweise von Wasserstoff oder Erdgas, umfasst zumindest einen Speicherbehälter zur Umschließung des flüssigen oder gasförmigen Mediums mit zumindest einer Öffnung, in welche ein Ventil eingesetzt ist. Durch die in den Ventilgrundkörper eingebauten Schalt- und Regelelemente erfolgen die Betankung und die Entnahme des flüssigen oder gasförmigen Mediums. Das elektromagnetische Ventil wird bei der Entnahme des Mediums strombeaufschlagt und aktiv geöffnet. Bei der Betankung wird das elektromagnetische Ventil nicht strombeaufschlagt. Aus Sicherheitsgründen ist das elektromagnetische Ventil im stromlosen Zustand geschlossen.

Als elektromagnetisches Ventil wird bei solchen Druckbehältern in der Regel ein vorgesteuertes Ventil eingesetzt, um die Leistungsaufnahme gering zu halten.

Aus der DE 10 2006 025 965 A1 ist eine Gaszylinder-Ventilanordnung bekannt, welche ein Gehäuse mit einem Hauptventilkörper aufweist. Der Hauptventilkörper hat eine Flüssigkeitsverbindung, wobei eine Flüssigkeit zwischen dem Einlass und dem Gehäuse oder einem Ventilkörperauslass strömt, wobei ein Ventilschaft zum Sperren der Flüssigkeitsströmung durch eine Durchgangsverbindung bewegt werden kann. Am Hauptventilkörper verläuft innerhalb des Ventilkörpers ein manuelles Abschaltventil, um selektiv die Flüssigkeitsströmung durch die Durchgangsverbindung zu sperren. Die Verwendung von zwei Ventilen erhöht sowohl den Aufwand an Bauraum als auch die Kosten für ein solches elektromagnetisches Ventil.

Ein elektromagnetisches Ventil für einen Druckbehälter, umfassend eine manuelle Absperrung des Ventils wurde bereits in US 4 286 768 offenbart.

Die Aufgabe der vorliegenden Erfindung besteht deshalb darin, eir elektromagnetisches Ventil, ein Verfahren zum Betreiben eines elektromagnetischen Ventils und einen Druckbehälter zur Verfügung zu stellen, bei dem das elektromagnetische Ventil trotz manueller Absperrung einen geringen Bauraum benötigt. Ferner soll das elektromagnetische Ventil in seiner Herstellung preiswert sein.

Diese Aufgabe wird gelöst mit einem elektromagnetischen Ventil für einen Druckbehälter, gemäß dem Anspruch 1.

Bei einem solchen elektromagnetischen Ventil wird der Bauraum verkleinert, da bei einer manuellen Absperrung des elektromagnetischen Ventils Funktionselemente der elektromagnetischen Absperrung per Hand zum Verschluss des Druckbehälters betätigt werden. Eine solche Vorrichtung ermöglicht sowohl ein elektromagnetisches als auch ein manuelles Öffnen und Schließen des elektromagnetischen Ventils mit dem gleichen Dichtelement, so dass das Ventil nur ein Dichtelement aufweist.

In einer weiteren Ausgestaltung betätigt, vorzugsweise mittelbar, das bewegbare Anschlagteil das Dichtelement der elektromagnetischen Absperrung und/oder das Dichtelement ist durch das bewegbare Anschlagteil in eine erste Richtung bewegbar, so dass das Dichtelement die Öffnung verschließt, oder das Dichtelement ist durch das bewegbare Anschlagteil in eine zweite Richtung bewegbar, so dass das Dichtelement die Öffnung freigibt. Durch die verringerte Anzahl von notwendigen Bauteilen des elektromagnetischen Ventils verringert sich nicht nur der Bauraumbedarf, sondern es wird gleichzeitig die Anzahl der Dichtstellen reduziert.

Insbesondere steht das bewegbare Anschlagteil mit dem Stößel in mechanischer Verbindung zum Bewegen des Stößels. Der Stößel als Funktionselement der elektromagnetischen Absperrung wird dabei manuell von dem bewegbaren Anschlagteil betätigt.

In einer ergänzenden Ausführungsform ist das bewegbare Anschlagteil mit einem Mechanismus bewegbar, wobei der Mechanismus insbesondere ein Gewinde oder einen Spindeltrieb umfasst.

Vorzugsweise umfasst der Stößel ein Verbindungsteil, welcher in das bewegbare Abschlagteil eingreift, so dass aufgrund eines Formschlusses zwischen dem Stößel und dem Anschlagteil der Stößel von dem Anschlagteil bewegbar ist. Das Verbindungsteil ermöglicht somit das manuelle Öffnen des Ventils. Ein solches manuelles Öffnen ist notwendig, um beispielsweise im Servicefall den Druckbehälter entleeren zu können, ohne das Ventil elektromagnetisch ansteuern zu müssen.

In einer weiteren Ausgestaltung greift das Verbindungsteil in einen Hohlraum des bewegbaren Anschlagteiles ein und/oder bei stromlos geschalteter, deaktivierter Magnetspule ist ein Zwischenraum zwischen Stößel und dem bewegbaren Anschlagteil ausgebildet. Somit wird die Funktionsweise des Ventils bei dessen elektromagnetischer Betätigung zuverlässig gewährleistet.

In einer Variante dient bei aktivierter Magnetspule das bewegbare Anschlagteil unter Rückbildung des Zwischenraumes zwischen Stößel und bewegbarem Anschlagteil als Anschlag für den Stößel.

In einer weiteren Ausführungsform ist das Fluid durch eine erste Öffnung in einen Raum einleitbar, welcher sich zwischen Stößel und Dichtelement der elektromagnetischen Absperreinheit erstreckt, wodurch ein Druck in dem Raum aufbaubar ist und von dem Stößel bei aktivierter Magnetspule ein erster Stellweg zurücklegbar ist, so dass eine Durchgangsbohrung des Dichtelementes freigegeben ist, und dabei das Dichtelement seine Position beibehält.

In einer weiteren Ausführungsform ist bei der durch den Stößel freigegebenen Durchgangsbohrung des Dichtelementes an der zweiten Öffnung ein Gegendruck aufgrund eines Strömens des Fluids durch die erste Öffnung und die Durchgangsbohrung aufbaubar, wobei bei aktivierter Magnetkraft der Magnetspule, sobald das Druckverhältnis zwischen beiden Seiten des Dichtelementes ausreicht, der Stößel einen zweiten Stellweg zurücklegt, bei welchem das Dichtelement durch einen Mitnehmer aus seiner Position bewegbar ist und die zweite Öffnung freigibt, sobald die Kraft der Magnetspule und das Druckverhältnis zwischen beiden Seiten des Dichtelementes dazu ausreicht, wodurch eine, vorzugsweise im Vergleich zur Durchgangsbohrung größere, fluidleitende Verbindung zwischen der ersten und der zweiten Öffnung freigebbar ist. Durch ein solches gestuftes Öffnen des Ventiles wird die Kraft, die notwendig ist, um das Dichtelement aus seiner Lage zu bewegen und die zweite Öffnung freizugeben, verringert. Dies erfolgt insbesondere dadurch, dass sich ein Gegendruck an einer zweiten Seite des Dichtelementes aufbaut. Zusätzlich wird die erforderliche Zeit zum Öffnen des Ventils verkürzt, da das Dichtelement bei hinreichendem Druckverhältnis zwischen der ersten und zweiten Öffnung durch den Mitnehmer aktiv geöffnet wird.

In einer ergänzenden Variante weist der Mitnehmer eine zu dem Dichtelement gerichtete erste Ausnehmung auf und das Dichtelement umfasst eine zweite Ausnehmung, wobei in die erste Ausnehmung und die zweite Ausnehmung eingreifend ein Tragelement eingelegt ist und eine Geometrie der ersten Ausnehmung und der zweiten Ausnehmung dahingehend ausgelegt ist, dass der Stößel den ersten Stellweg zurücklegt, ohne dass das Dichtelement seine Position ändert.

In einer bevorzugten Ausführungsform besteht das Dichtelement wenigstens teilweise, insbesondere vollständig, aus einem metallischen Werkstoff oder aus Kunststoff.

In einer weiteren Ausgestaltung besteht der Stößel und/oder das Ventilgehäuse und/oder der Mitnehmer und/oder der Ventilgrundkörper wenigstens teilweise, insbesondere vollständig, aus Metall, z. B. Stahl oder Aluminium.

Zweckmäßig ist von dem Ventil ein in dieser Schutzrechtsanmeldung beschriebenes Verfahren ausführbar.

Ein erfindungsgemäßer Druckbehälter, insbesondere ein Compositebehälter umfasst ein in der Schutzrechtsanmeldung beschriebenes Ventil.

Ein erfindungsgemäßes Verfahren zum Betreiben eines elektromagnetischen Ventils in einem Druckbehälter, bei welchem das Ventil abgesperrt wird, indem eine Magnetspule unbestromt bleibt, wobei ein Stößel durch eine Federkraft und durch eine gegebenenfalls vorhandene Druckkraft gegen ein Dichtelement gedrückt wird und dadurch das Dichtelement eine zweite Öffnung verschließt und/oder das Ventil elektromagnetisch geöffnet wird, indem bei bestromter Magnetspule der Stößel von der Magnetkraft entgegen der Federkraft bewegt wird und das Dichtelement von dem Stößel, vorzugsweise nach erfolgtem Druckausgleich über die Durchgangsbohrung im Dichtelement, mitbewegt wird und dadurch die zweite Öffnung geöffnet wird und das Ventil manuell abgesperrt oder geöffnet wird, wobei zur manuellen Absperrung das Anschlagteil in eine erste Richtung bewegt wird, wodurch das Dichtelement zur zweiten Öffnung hin bewegt wird und die zweite Öffnung so verschlossen wird und/oder zur manuellen Öffnung das Anschlagteil in eine zweite Richtung bewegt wird, wodurch das Dichtelement von der zweiten Öffnung weg bewegt wird und die zweite Öffnung so geöffnet wird. Trotz einer begrenzten Anzahl an Bauelementen kann das Ventil zuverlässig sowohl auf elektromagnetischem Wege betätigt als auch auf manuellem Wege geöffnet und verschlossen werden.

In einer ergänzenden Variante werden der Stößel und/oder das Dichtelement von dem Anschlagteil mitbewegt.

Vorzugsweise wird mittels einer formschlüssigen Verbindung zwischen Anschlagteil und Stößel der Stößel vom Anschlagteil bewegt und/oder mittels einer form-, stoff- und/oder kraftschlüssigen Verbindung zwischen Stößel und Dichtelement das Dichtelement von dem Stößel bewegt.

Im Nachfolgenden wird ein Ausführungsbeispiel der Erfindung unter Bezugnahme auf die beigefügte Zeichnung näher beschrieben. Es zeigt:
Fig. 1: Schnitt durch ein elektromagnetisches Ventil und
Fig. 2: Ausschnitt aus dem elektromagnetischen Ventil gemäß Fig. 1.

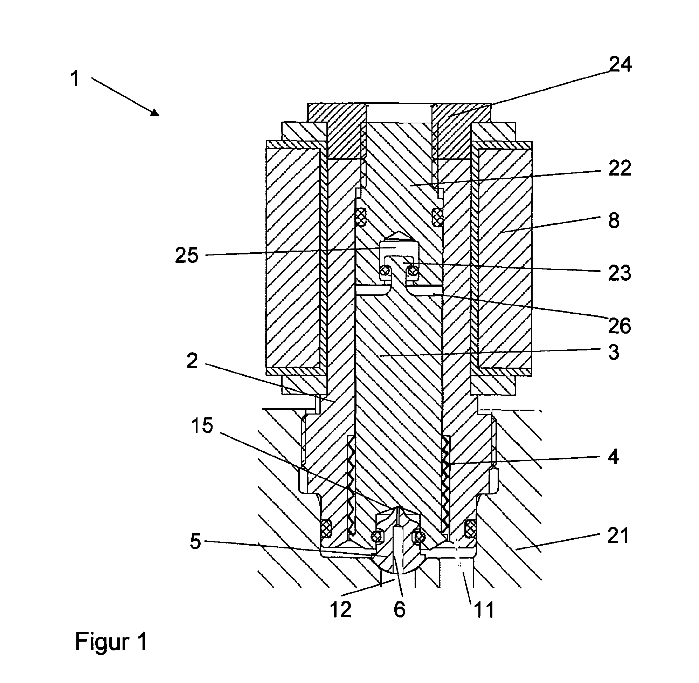

Das in Fig. 1 dargestellte elektromagnetische Ventil 1 dient zur Entnahme einer Flüssigkeit oder eines Gases, z. B. Wasserstoff oder Erdgas, welches im Weiteren als Fluid bezeichnet wird, aus einem Druckbehälter bzw. zur Betankung des Druckbehälters (nicht dargestellt).

Das elektromagnetische Ventil 1 besteht aus einem Ventilgehäuse 2, in dessen Innerem ein Stößel 3 angeordnet ist, welcher mittels eines Federelementes 4 gegen ein Dichtelement 5 gedrückt wird. Das Dichtelement 5 weist dabei eine Durchgangsbohrung 6 in Form einer durchgehenden Öffnung auf, welche zwei unterschiedliche Querschnitte aufweist. In Richtung zum Stößel 3 weist die Durchgangsbohrung 6 einen kleineren Durchmesser auf, woran sich ein größerer Durchmesser anschließt, der sich in entgegen gesetzter Richtung erstreckt. Eine Magnetspule 8 umgreift das Ventilgehäuse 2 und somit auch den Stößel 3, welcher in dem Ventilgehäuse 2 angeordnet ist. Der Stößel 3 sitzt mit seiner Stirnseite auf einem Vorsprung 15 des Dichtelementes 5. Das Dichtelement 2 selbst sitzt auf dem Ventilgrundkörper 21 des Druckbehälters an einer zweiten Öffnung 12 und verschließt somit das Ventil 1 gegenüber der Umgebung. Dieser Abschnitt des Dichtelementes 5 wird als Hauptsitz bezeichnet. Demgegenüber wird der Abschnitt, die der Stößel 3 auf dem Vorsprung 15 des Dichtelementes 5 einnimmt, bei welcher die Durchgangsbohrung 6 des Dichtelementes 5 verschlossen gehalten wird, als Vorsteuersitz 9 bezeichnet.

Auf der zu dem Dichtelement 5 abgewandten Seite weist der Stößel 3 ein pilzförmiges Verbindungsteil 23 auf, welches in einen Hohlraum 25 eines bewegbaren Anschlagteiles 22 eingreift. Das bewegbare Anschlagteil 22 und der Stößel 3 sind bei deaktivierter Magnetspule 8 durch einen Zwischenraum 26 getrennt. Das bewegbare Anschlagteil 22 ist zwischen der Magnetspule 8 angeordnet und mit einem Sechskant 24 verbunden, welcher aus dem Ventilaufbau herausragt. Mittels des Sechskantes 24 wird das mit einem Außengewinde versehene bewegbare Anschlagteil 22 in das Ventilgehäuse 2, welches ein Innengewinde aufweist, per Hand von außen mit einem Schraubwerkzeug bewegt. Soll das Ventil 1 manuell geschlossen werden, wird mit dem Sechskant 24 das Anschlagteil 22 nach innen zu dem Dichtelement 5 in einer ersten Richtung zu dem Stößel 3 geschraubt, bis das Anschlagteil 22 den Stößel 3 berührt (nicht dargestellt) und der Zwischenraum 26 verschwunden ist. Der Stößel 3 wird gegebenenfalls auch gegen die Magnetkraft der Magnetspule 8 nach unten gegen das Dichtelement 5 gedrückt, welches wiederum auf die zweite Öffnung 12 gedrückt wird und diese verschließt, wodurch das Ventil 1 manuell verschlossen wird und auch bei einer aktivierter Magnetspule 8 nicht geöffnet werden kann. Auch ein Befüllen des Druckbehälters ist in diesem Zustand nicht möglich, da auch bei einem höheren Druck in Öffnung 12 als in Öffnung 11 das Dichtelement 5 über den Stößel 3 durch das Anschlagteil 22 in seiner Position gehalten wird, wodurch Öffnung 12 verschlossen bleibt.

Ebenso ist ein manuelles Öffnen des Ventils 1 möglich. Das bewegbare Anschlagteil 22 wird mit dem Sechskant 24 aus dem Ventilgehäuse 2 in einer zweiten Richtung herausgeschraubt, wodurch das Verbindungsteil 23 des Stößels 3 von dem bewegbaren Anschlagelement 22 mitgenommen wird, da das Verbindungsteil 23 auf einer unteren Begrenzung des Hohlraumes 25 aufliegt (nicht dargestellt) und der Stößel 3 entgegen der Federkraft des Federelementes 4 angehoben wird. Die erste und zweite Richtung der Bewegung des Anschlagteiles 22 sind entgegengesetzt gerichtet. Der Stößel 3 gibt einen Vorsteuersitz 9 des Dichtelementes 5 frei. Nach erfolgtem Druckausgleich (siehe nachfolgende Beschreibung) bewegt sich das Dichtelement 5 in Richtung des Stößels 3, wodurch das Dichtelement 5 die Öffnung 12 freigibt und das Ventil 1 geöffnet wird.

Neben dem manuellen Öffnen und Schließen des Ventils 1 ist dieses auch elektromagnetisch betätigbar, was im Folgenden beschrieben ist.

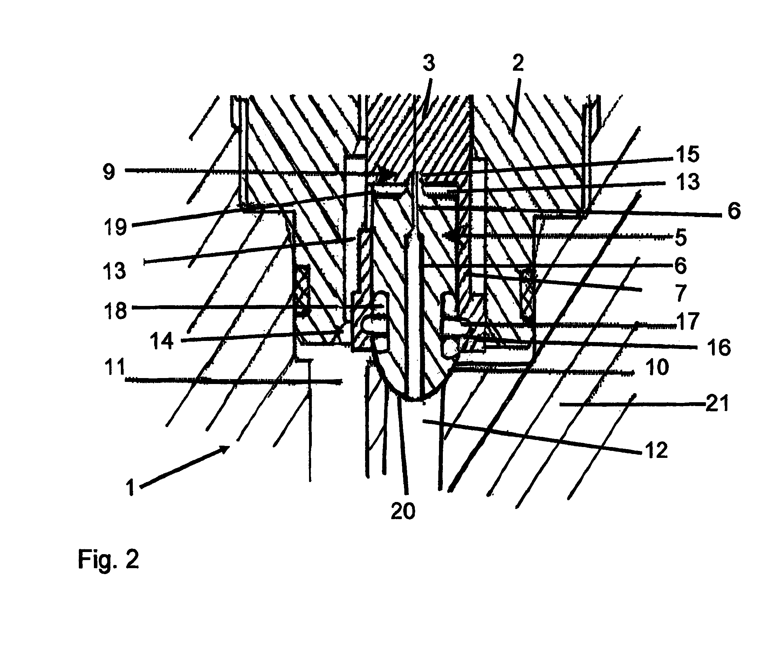

Beim Vorsteuersitz 9 ist zwischen dem Stößel 3 und dem Dichtelement 5 ein Ringraum 13 ausgebildet (Fig. 2), welcher über einen Kanal 14 mit der Öffnung 11 verbunden ist, wobei die Öffnung 11 zu einem Druckbehälter führt. Darüber hinaus ist der Stößel 3 einstückig mit einem Mitnehmer 7 ausgebildet, wobei der Mitnehmer 7 das Dichtelement 5 weitgehend umschließt. Das Dichtelement 5 weist eine erste Ringnut 18 auf, welche im unteren Teil des Dichtelementes 5 in Richtung Öffnung 12 ausgebildet ist. In diese Ringnut 18 ist ein Tragelement 17 eingelegt. Dieses Tragelement 17 ist so ausgebildet, dass es in seinen Abmessungen radial über das Dichtelement 5 herausragt und in eine zweite Ringnut 16 des Mitnehmers 7 eingreift. Diese zweite Ringnut 16 ist dabei so ausgebildet, dass die Dicke des Tragelementes 17 der axialen Ausdehnung der Ringnut 16 entspricht, so dass sich das Tragelement 17 innerhalb der Ausnehmung 16 des Mitnehmers 7 nicht bewegen kann. Im Gegensatz dazu überragt die axiale Ausdehnung der ersten Ringnut 18 des Dichtelementes 5 die Dicke des Tragelementes 17, so dass das Tragelement 17 beabstandet zu den Innenwänden der Ringnut 18 des Dichtelementes 5 angeordnet ist.

Im Weiteren soll die Funktionsweise des elektromagnetischen Ventiles 1 näher erläutert werden. Ausgehend von der in Figur 2 dargestellten Position des Ventiles 1 ist das Tragelement 17 mittig in der Ringnut 18 des Dichtelementes 5 angeordnet. Es soll der Fall betrachtet werden, dass aus dem nicht weiter dargestellten Druckbehälter das Fluid entnommen werden soll und aus dem Ventil 1 durch die Öffnung 12 ausströmt. Dabei fließt das Fluid zunächst durch die Öffnung 11 über den Kanal 14 in den Raum 13, insbesondere Ringraum 13. Vor der Aktivierung der Magnetspule 8 herrscht in dem Ringraum 13 bzw. Raum 13 aufgrund der vorhandenen fluidleitenden Verbindung zwischen der ersten Öffnung 11 und dem Ringraum 13 in dem Ringraum 13 im Wesentlichen der gleiche Druck wie an der ersten Öffnung 11, welche in einen von dem Druckbehälter eingeschlossenen Druckbehälterinnenraum mündet. Aufgrund dieses Druckes wird auf eine erste Seite 19 des Dichtelementes 5 eine Kraft aufgebracht, welche das Dichtelement 5 auf den Ventilgrundkörper 21 drückt, so dass die zweite Öffnung 12 verschlossen ist. Die zweite Öffnung 12 mündet bei einem Einsatz des Druckbehälters mit dem Ventil 1 in einem Kraftfahrzeug beispielweise zu einem Verbrennungsmotor oder einer Brennstoffzelle, und einem Füllanschluss.

Ist die Magnetspule 8 aktiviert, bewegt sich der Stößel 3 weg von dem Vorsprung 15 des Dichtelementes 5 in einem ersten Stellweg und gibt somit die Durchgangsbohrung 6 frei. Bei dem ersten Stellweg, welchen der Stößel 3 zurücklegt, bewegt sich das Tragelement 17, welches von dem Mitnehmer 7 aufgrund der Bewegung des Stößels 3 mitgenommen wird, noch innerhalb der zweiten Ausnehmung 18 des Dichtelementes 5. Das Dichtelement 5 verbleibt somit in seiner Lage. Das Fluid fließt aus dem Ringraum 13 durch die vom Stößel 3 freigegebene Durchgangsbohrung 6 und auf der entgegengesetzten Seite aus dem Dichtelement 5 aus. Das bedingt, dass sich auf dieser zweiten Seite 20 des Dichtelementes 5 ein Gegendruck aufbaut, welcher von außen gegen das Dichtelement 5 drückt, so dass das Dichtelement 5 mit einer geringen Kraft von der zweiten Öffnung 12 weg bewegt werden kann.

Bei weiter aktivierter Magnetspule 8 und einem ausreichendem Druckausgleich zwischen Ringraum 13 und der zweiten Öffnung 12 legt der Stößel 3 einen zweiten Stellweg zurück, bei welchem nun das Tragelement 17 von dem Mitnehmer 7 gegen die Wandung der Ringnut 18 des Dichtelementes 5 gedrückt wird, wobei das Dichtelement 5 aus seiner Lage gedrückt wird. Auf Grund des Gegendruckes, welcher sich an der zweiten Seite 20 des Dichtelementes 5 eingestellt hat, ist nur eine geringere Kraft notwendig, um das Dichtelement 5 aus seiner Lage zu bewegen und die Öffnung 12 des Ventilgrundkörpers 21 wird frei gegeben. Durch diese Bewegung des Dichtelementes 5 wird die Öffnung 11 direkt mit der Öffnung 12 verbunden, wobei das Fluid in einer größeren Menge als durch die Durchgangsbohrung 6 aus dem Druckbehälter ausfließen kann.

Bei Beendigung des Entnahmevorgangs wird die Magnetspule 8 stromlos geschalten. Da die Öffnung 11 zu diesem Zeitpunkt direkt mit der Öffnung 12 verbunden ist, herrscht sowohl im Ringraum 13 als auch in der Öffnung 12 annähernd der gleiche Druck. Dadurch haben die Druckkräfte nur einen geringen Einfluss auf die Lage der Dichtelementes 5. Infolgedessen wird bei stromlos geschalteter Spule das Dichtelement 5 durch die Kraft des Federelementes 4 gegen die Öffnung 12 des Ventilgehäuses 21 bewegt, wodurch die Öffnung 12 verschlossen wird.

Soll nun der Druckbehälter gefüllt werden, ist die Magnetspule 8 stromlos geschaltet. Durch den stromlos geschalteten, deaktivierten Zustand der Magnetspule 8 wird der Stößel 3 durch die wirksame Federkraft des Federelementes 4 auf das Dichtelement 5 gedrückt und schließt somit das Ventil 1. Durch den Druck des einströmenden Fluids, welches an der zweiten Seite 20 des Dichtelementes 5 eine Kraft aufbringt, werden das Dichtelement 5 und der Stößel 3 entgegen der Kraft der Feder 4 gedrückt, und die Öffnung 12 des Ventilgehäuses 2 wird freigegeben. Die Bewegungen des Stößels 3 für das elektromagnetische Betätigen des Ventils 1 sind möglich, weil der Hohlraum 25 in dem bewegbaren Anschlagteil 22 eine Bewegung des Verbindungsteiles 23 in dem Hohlraum 25 aufgrund dessen Geometrie mit Bewegungsfreiraum gestattet. Hierzu befindet sich das Anschlagteil 22 in einer entsprechenden Position. Das Anschlagteil 22 muss sich somit für ein elektromagnetisches Öffnen und Schließen des Ventils 1 in dieser Position befinden, damit die Bewegung des Stößels 3 von dem Anschlagteil 22 nicht behindert ist.

Insgesamt betrachtet sind mit dem erfindungsgemäßen elektromagnetischen Ventil 1 wesentliche Vorteile verbunden. Das Ventil 1 benötigt nur ein zusätzliches Anschlagteil 22, um Funktionselemente der elektromagnetischen Absperrung, wie Stößel 3 und Dichtelement 5, für eine manuelle Betätigung des Ventils 1 zu benutzen. Durch die konstruktive Gestaltung des Ventils 1 wird der Bauraum des Ventils 1 wesentlich verkleinert und die Anzahl der Bauteile entscheidend reduziert.

### BEZUGSZEICHENLISTE

- 1: Ventil
- 2: Ventilgehäuse
- 3: Stößel
- 4: Federelement
- 5: Dichtelement
- 6: Durchgangsbohrung
- 7: Mitnehmer
- 8: Magnetspule
- 9: Vorsteuersitz
- 10: Hauptsitz
- 11: Erste Öffnung
- 12: Zweite Öffnung
- 13: Ringraum
- 14: Kanal
- 15: Vorsprung
- 16: Zweite Ringnut
- 17: Tragelement
- 18: Erste Ringnut
- 19: erste Seite des Dichtelementes
- 20: zweite Seite des Dichtelementes
- 21: Ventilgrundkörper
- 22: Bewegbares Anschlagteil
- 23: Verbindungsteil
- 24: Sechskant
- 25: Hohlraum
- 26: Zwischenraum

## Patentansprüche

1. Elektromagnetisches Ventil (1) für einen Druckbehälter, umfassend
- eine manuelle Absperrung des Ventils (1),
- einen Anschlag (22) und
- eine elektromagnetische Absperrung des Ventils (1) mit einem Dichtelement (5), einer Magnetspule (8), einem Stößel (3) und einem Federelement (4), wobei der durch das Federelement (4) gegen das Dichtelement (5) gedrückte Stößel (3) das Dichtelement (5) bei stromlos geschalteter, deaktivierter Magnetspule (8) auf eine zweite Öffnung (12) drückt, um eine fluidleitende Verbindung aus dem Druckbehälter zu unterbinden und der Stößel (3) bei aktivierter Magnetspule (8) von dem Dichtelement (5) weg bis zu dem Anschlag (22) bewegbar ist, wodurch die fluidleitende Verbindung freigebbar ist,
wobei
der Anschlag (22) durch ein bewegbares Anschlagteil (22) der manuellen Absperrung gebildet ist, **dadurch gekennzeichnet, dass** das bewegbare Anschlagteil (22) das Dichtelement (5) der elektromagnetischen Absperrung betätigt, und
das Dichtelement (5) durch das bewegbare Anschlagteil (22) in eine erste Richtung bewegbar ist, so dass das Dichtelement (5) die Öffnung (12) verschließt und
das Dichtelement (5) durch das bewegbare Anschlagteil (22) in eine zweite Richtung bewegbar ist, so dass das Dichtelement (5) die Öffnung (12) freigibt.

2. Elektromagnetisches Ventil nach Anspruch 1,
**dadurch gekennzeichnet, dass**
das bewegbare Anschlagteil (22) mit dem Stößel (3) in mechanischer Verbindung steht zum Bewegen des Stößels (3).

3. Elektromagnetisches Ventil nach Anspruch 2,
**dadurch gekennzeichnet, dass**
das bewegbare Anschlagteil (22) mit einem Mechanismus bewegbar ist, wobei der Mechanismus insbesondere ein Gewinde oder einen Spindeltrieb umfasst.

4. Elektromagnetisches Ventil nach einem oder mehreren der vorhergehenden Ansprüche,
**dadurch gekennzeichnet, dass**,
der Stößel (3) ein Verbindungsteil (23) umfasst, welcher in das bewegbare Anschlagteil (22) eingreift, so dass aufgrund eines Formschlusses zwischen dem Stößel (3) und dem Anschlagteil (22) der Stößel (3) mit dem Anschlagteil (22) bewegbar ist.

5. Elektromagnetisches Ventil nach Anspruch 4,
**dadurch gekennzeichnet, dass**
das Verbindungsteil (23) in einen Hohlraum (25) des bewegbaren Anschlagteiles (22) eingreift
und/oder
bei stromlos geschalteter, deaktivierter Magnetspule (8) ein Zwischenraum (26) zwischen Stößel (3) und dem bewegbaren Anschlagteil (22) ausgebildet ist.

6. Elektromagnetisches Ventil nach Anspruch 5,
**dadurch gekennzeichnet, dass**
bei aktivierter Magnetspule (8) das bewegbare Anschlagteil (22) unter Rückbildung des Zwischenraumes (26) zwischen Stößel (3) und bewegbarem Anschlagteil (22) als Anschlag für den Stößel (3) dient.

7. Elektromagnetisches Ventil nach einem oder mehreren der vorhergehenden Ansprüche,
**dadurch gekennzeichnet, dass**
das Fluid durch eine erste Öffnung (11) in einen Raum (13) einleitbar ist, welcher sich zwischen Stößel (3) und Dichtelement (5) der elektromagnetischen Absperreinheit erstreckt, wodurch ein Druck in dem Raum (13) aufbaubar ist und von dem Stößel (3) bei aktivierter Magnetspule (8) ein erster Stellweg zurücklegbar ist, so dass eine Durchgangsbohrung (6) des Dichtelementes (5) freigegeben ist, und dabei das Dichtelement (5) seine Position beibehält.

8. Elektromagnetisches Ventil nach Anspruch 7,
**dadurch gekennzeichnet, dass**
bei der durch den Stößel (3) freigegebenen Durchgangsbohrung (6) des Dichtelementes (5) an der zweiten Öffnung (12) ein Gegendruck aufgrund eines Strömens des Fluids durch die erste Öffnung (11) und die Durchgangsbohrung (6) aufbaubar ist, wobei bei aktivierter Magnetkraft der Magnetspule (8) der Stößel (3) einen zweiten Stellweg zurücklegt, bei welchem das Dichtelement (5) durch den Mitnehmer (7) aus seiner Position bewegbar ist und die zweite Öffnung (12) freigibt sobald die Kraft der Magnetspule (8) und das Druckverhältnis zwischen den beiden Seiten (19, 20) des Dichtelementes (5) dazu ausreicht, wodurch eine, vorzugsweise im Vergleich zur Durchgangsbohrung (6) größere, fluidleitende Verbindung zwischen der ersten Öffnung (11) und der zweiten Öffnung (12) freigebbar ist.

9. Elektromagnetisches Ventil nach Anspruch 8,
**dadurch gekennzeichnet, dass**
der Mitnehmer (7) eine zu dem Dichtelement (5) gerichtete erste Ausnehmung (16) aufweist und das Dichtelement (5) eine zweite Ausnehmung (18) umfasst, wobei in die erste Ausnehmung (16) und die zweite Ausnehmung (18) eingreifend ein Tragelement (17) eingelegt ist und eine Geometrie der ersten Ausnehmung (16) und der zweiten Ausnehmung (18) dahingehend ausgelegt ist, dass der Stößel (3) den ersten Stellweg zurücklegt, ohne dass das Dichtelement (5) seine Position verändert.

10. Druckbehälter, insbesondere Compositebehälter,
**dadurch gekennzeichnet, dass**
der Druckbehälter ein Ventil (1) nach einem oder mehreren der vorhergehenden Ansprüche aufweist.

11. Verfahren zum Betreiben eines elektromagnetischen Ventils in einem Druckbehälter, bei welchem
- das Ventil (1) abgesperrt wird, indem eine Magnetspule (8) unbestromt bleibt, wobei ein Stößel (3) durch eine Federkraft gegen ein Dichtelement (5) gedrückt wird und dadurch das Dichtelement (5) eine zweite Öffnung (12) verschließt
und/oder
das Ventil (1) elektromagnetisch geöffnet wird, indem bei bestromter Magnetspule (8) der Stößel (3) von der Magnetkraft entgegen der Federkraft bewegt wird und das Dichtelement (5) von dem Stößel (3) mitbewegt wird und dadurch die zweite Öffnung (12) geöffnet wird,
- das Ventil (1) manuell abgesperrt oder geöffnet wird,
**dadurch gekennzeichnet, dass**
zur manuellen Absperrung das Anschlagteil (22) in eine erste Richtung bewegt wird, wodurch das Dichtelement (5) zur Öffnung (12) hin bewegt wird und so die Öffnung (12) verschlossen wird
und
zur manuellen Öffnung das Anschlagteil (22) in eine zweite Richtung bewegt wird, wodurch das Dichtelement (5) von der Öffnung (12) weg bewegt wird und so die Öffnung (12) geöffnet wird.

12. Verfahren nach Anspruch 11,
**dadurch gekennzeichnet, dass**
der Stößel (3) und/oder das Dichtelement (5) von dem Anschlagteil (22) mitbewegt werden.

13. Verfahren nach Anspruch 11 oder 12,
**dadurch gekennzeichnet, dass**
mittels einer formschlüssigen Verbindung zwischen Anschlagteil (22) und Stößel (3) der Stößel (3) vom Anschlagteil (22) bewegt wird und/oder
mittels einer form-, stoff- und/oder kraftschlüssigen Verbindung zwischen Stößel (3) und Dichtelement (5) das Dichtelement (5) von dem Stößel (3) bewegt wird.

14. Elektromagnetisches Ventil nach einem oder mehreren der Ansprüche 1 bis 9,
**dadurch gekennzeichnet, dass**
von dem Ventil (1) ein Verfahren nach einem oder mehreren der Ansprüche 11 bis 13 ausführbar ist.

## Claims

1. Electromagnetic valve (1) for a pressure container, comprising
- a manual shut-off of the valve (1),
- a stop (22), and
- an electromagnetic shut-off of the valve (1) with a sealing element (5), a magnet coil (8), a tappet (3), and a spring element (4), wherein, when the magnet coil (8) has been switched so as to be currentless and is deactivated, the tappet (3) pressed against the sealing element (5) by the spring element (4) presses the sealing element (5) onto a second opening (12) so as to suppress a fluidic connection from the pressure container, and, when the magnet coil (8) is activated, the tappet (3) can be moved away from the sealing element (5) as far as the stop (22), whereby the fluidic connection can be released,
wherein
the stop (22) is formed by a movable stop part (22) of the manual shut-off
**characterized in that**
the movable stop part (22) actuates the sealing element (5) of the electromagnetic shut-off,
and
the sealing element (5) can be moved in a first direction by the movable stop part (22) such that the sealing element (5) closes the opening (12), and
the sealing element (5) can be moved in a second direction by the movable stop part (22) such that the sealing element (5) releases the opening (12).

2. Electromagnetic valve according to Claim 1,
**characterized in that**
the movable stop part (22) is mechanically connected to the tappet (3) to move the tappet (3).

3. Electromagnetic valve according to Claim 2,
**characterized in that**
the movable stop part (22) can be moved by a mechanism, wherein the mechanism in particular comprises a thread or a spindle drive.

4. Electromagnetic valve according to one or more of the preceding claims,
**characterized in that**
the tappet (3) comprises a connection part (23), which engages into the movable stop part (22) such that the tappet (3) can be moved with the stop part (22) due to a positive fit between the tappet (3) and the stop part (22).

5. Electromagnetic valve according to Claim 4,
**characterized in that**
the connection part (23) engages into a cavity (25) in the movable stop part (22)
and/or
a gap (26) is formed between the tappet (3) and the movable stop part (22) when the magnet coil (8) has been switched so as to be currentless and is deactivated.

6. Electromagnetic valve according to Claim 5,
**characterized in that**
the movable stop part (22) is used as a stop for the tappet (3) when the magnet coil (8) is activated, with restitution of the gap (26) between the tappet (3) and the movable stop part (22).

7. Electromagnetic valve according to one or more of the preceding claims,
**characterized in that**
the fluid can be introduced through a first opening (11) into a chamber (13), which extends between the tappet (3) and sealing element (5) of the electromagnetic shut-off unit, whereby a pressure can be built up in the chamber (13) and the tappet (3) can cover a first displacement path when the magnet coil (8) is activated, such that a through-bore (6) in the sealing element (5) is released and the sealing element (5) retains its position during this process.

8. Electromagnetic valve according to Claim 7,
**characterized in that**,
with the through-bore (6) in the sealing element (5) released by the tappet (3), a counter pressure can be built up at the second opening (12) due to a flow of the fluid through the first opening (11) and the through-bore (6), wherein, with activated magnetic force of the magnet coil (8), the tappet (3) covers a second displacement path, in which case the sealing element (5) can be moved out of its position by the driver (7) and releases the second opening (12) as soon as the force of the magnet coil (8) and the pressure ratio between the two sides (19, 20) of the sealing element (5) are sufficient for this purpose, whereby a fluidic connection, which is preferably larger compared to the through-bore (6), between the first opening (11) and the second opening (12) can be released.

9. Electromagnetic valve according to Claim 8,
**characterized in that**
the driver (7) has a first recess (16) directed to the sealing element (5), and the sealing element (5) comprises a second recess (18), wherein a support element (17) is inserted in an engaging manner into the first recess (16) and the second recess (18) and a geometry of the first recess (16) and of the second recess (18) is designed such that the tappet (3) covers the first displacement path without any change to the position of the sealing element (5).

10. Pressure container, in particular a composite container,
**characterized in that**
the pressure container has a valve (1) according to one or more of the preceding claims.

11. Method for operating an electromagnetic valve in a pressure container, in said method
- the valve (1) is shut off by keeping a magnet coil (8) in the de-energized state, wherein a tappet (3) is pressed against a sealing element (5) by a resilient force and the sealing element (5) thus closes a second opening (12), and/or,
- when the magnet coil (8) is energized, the valve (1) is electromagnetically opened by moving the tappet (3) by means of the magnetic force against the resilient force, and the sealing element (5) is entrained by the tappet (3) and the second opening (12) is thus opened,
- the valve (1) is shut off or opened manually,
**characterized in that**,
for manual shut-off, the stop part (22) is moved in a first direction, whereby the sealing element (5) is moved toward the opening (12) and the opening (12) is thus closed,
and,
for manual opening, the stop part (22) is moved in a second direction, whereby the sealing element (5) is moved away from the opening (12) and the opening (12) is thus opened.

12. Method according to Claim 11,
**characterized in that**
the tappet (3) and/or the sealing element (5) is/are entrained by the stop part (22).

13. Method according to Claim 11 or 12,
**characterized in that**
the tappet (3) is moved by the stop part (22) by means of a positive connection between the stop part (22) and the tappet (3)
and/or
the sealing element (5) is moved by the tappet (3) by means of a positive, integral and/or non-positive connection between the tappet (3) and the sealing element (5).

14. Electromagnetic valve according to one or more of Claims 1 to 9,
**characterized in that**
a method according to one or more of Claims 11 to 13 can be carried out by the valve (1).

## Revendications

1. Soupape électromagnétique (1) pour un récipient sous pression, comprenant
- un élément d'arrêt manuel de la soupape (1),
- une butée (22) et
- un élément d'arrêt électromagnétique de la soupape (1) avec un élément d'étanchéité (5), une bobine magnétique (8), un poussoir (3) et un élément de ressort (4), le poussoir (3) pressé contre l'élément d'étanchéité (5) par l'élément de ressort (4) pressant l'élément d'étanchéité (5) sur une deuxième ouverture (12) lorsque la bobine magnétique (8) est désactivée et est connectée sans alimentation en courant, afin de supprimer une connexion conduisant les fluides sortant du récipient sous pression, et le poussoir (3) pouvant être écarté de l'élément d'étanchéité (5) jusqu'à la butée (22) lorsque la bobine magnétique (3) est activée, de sorte que la connexion conduisant les fluides puisse être libérée,
la butée (22) étant formée par une partie de butée mobile (22) de l'élément d'arrêt manuel, **caractérisée en ce que** la partie de butée mobile (22) actionne l'élément d'étanchéité (5) de l'élément d'arrêt électromagnétique, et
l'élément d'étanchéité (5) peut être déplacé par la partie de butée mobile (22) dans une première direction, de sorte que l'élément d'étanchéité (5) ferme l'ouverture (12) et
l'élément d'étanchéité (5) peut être déplacé par la partie de butée mobile (22) dans une deuxième direction, de sorte que l'élément d'étanchéité (5) libère l'ouverture (12).

2. Soupape électromagnétique selon la revendication 1,
**caractérisée en ce que**
la partie de butée mobile (22) est en liaison mécanique avec le poussoir (3) pour déplacer le poussoir (3).

3. Soupape électromagnétique selon la revendication 2,
**caractérisée en ce que**
la partie de butée mobile (22) peut être déplacée avec un mécanisme, le mécanisme comprenant en particulier un filetage ou une commande de broche.

4. Soupape électromagnétique selon l'une quelconque ou plusieurs des revendications précédentes,
**caractérisée en ce que**
le poussoir (3) comprend une partie de connexion (23) qui vient en prise dans la partie de butée mobile (22), de sorte que le poussoir (3) puisse être déplacé avec la partie de butée (22) du fait d'un engagement par correspondance de forme entre le poussoir (3) et la partie de butée (22).

5. Soupape électromagnétique selon la revendication 4,
**caractérisée en ce que**
la partie de connexion (23) vient en prise dans une cavité (25) de la partie de butée mobile (22) et/ou
lorsque la bobine magnétique (8) est désactivée et est connectée sans alimentation en courant, un espace intermédiaire (26) entre le poussoir (3) et la partie de butée mobile (22) est réalisé.

6. Soupape électromagnétique selon la revendication 5,
**caractérisée en ce que**
lorsque la bobine magnétique (8) est activée, la partie de butée mobile (22) sert de butée pour le poussoir (3) en reformant l'espace intermédiaire (26) entre le poussoir (3) et la partie de butée mobile (22).

7. Soupape électromagnétique selon l'une quelconque ou plusieurs des revendications précédentes,
**caractérisée en ce que**
le fluide peut être guidé à travers une première ouverture (11) dans un espace (13) qui s'étend entre le poussoir (3) et l'élément d'étanchéité (5) de l'unité d'arrêt électromagnétique, de sorte qu'une pression puisse être créée dans l'espace (13) et qu'une première course de réglage puisse être parcourue par le poussoir (3) lorsque la bobine magnétique (8) est activée, de sorte qu'un alésage traversant (6) de l'élément d'étanchéité (5) soit libéré, et que l'élément d'étanchéité (5) conserve ainsi sa position.

8. Soupape électromagnétique selon la revendication 7,
**caractérisée en ce que**
lorsque l'alésage traversant (6) de l'élément d'étanchéité (5) est libéré par le poussoir (3), une contrepression peut être créée au niveau de la deuxième ouverture (12) du fait d'un écoulement du fluide à travers la première ouverture (11) et l'alésage traversant (6), et où, lorsque la force magnétique de la bobine magnétique (8) est activée, le poussoir (3) parcourt une deuxième course de réglage, dans laquelle l'élément d'étanchéité (5) peut être déplacé par l'élément d'entraînement (7) hors de sa position et libère la deuxième ouverture (12) dès que la force de la bobine magnétique (8) et que le rapport de pression entre les deux côtés (19, 20) de l'élément d'étanchéité (5) suffisent à cet effet, de sorte qu'une connexion conduisant les fluides, de préférence supérieure par rapport à l'alésage traversant (6), puisse être libérée entre la première ouverture (11) et la deuxième ouverture (12).

9. Soupape électromagnétique selon la revendication 8,
**caractérisée en ce que**
l'élément d'entraînement (7) présente un évidement (16) et l'élément d'étanchéité (5) comprend un deuxième évidement (18), un élément porteur (17) étant inséré en s'engageant dans le premier évidement (16) et le deuxième évidement (18) et une géométrie du premier évidement (16) et du deuxième évidement (18) étant conçue de sorte que le poussoir (3) parcoure la première course de réglage sans que l'élément d'étanchéité (5) ne modifie sa position.

10. Récipient sous pression, en particulier récipient composite,
**caractérisé en ce que**
le récipient sous pression présente une soupape (1) selon l'une quelconque ou plusieurs des revendications précédentes.

11. Procédé pour faire fonctionner une soupape électromagnétique dans un récipient sous pression, dans lequel
- la soupape (1) est bloquée en maintenant une bobine magnétique (8) sans alimentation en courant, un poussoir (3) étant pressé par une force de ressort contre un élément d'étanchéité (5) et de ce fait l'élément d'étanchéité (5) fermant une deuxième ouverture (12) et/ou
- la soupape (1) étant ouverte de manière électromagnétique en ce que, lorsque la bobine magnétique (8) est alimentée en courant, le poussoir (3) est déplacé par la force magnétique à l'encontre de la force de ressort et l'élément d'étanchéité (5) est déplacé conjointement par le poussoir (3) et de ce fait la deuxième ouverture (12) est ouverte,
- la soupape (1) est bloquée ou ouverte manuellement,
**caractérisé en ce que**
pour le blocage manuel, la partie de butée (22) est déplacée dans une première direction, de sorte que l'élément d'étanchéité (5) est déplacé vers l'ouverture (12) et de ce fait l'ouverture (12) est fermée et
pour l'ouverture manuelle, la partie de butée (22) est déplacée dans une deuxième direction, de sorte que l'élément d'étanchéité (5) est déplacé à l'écart de l'ouverture (12) et de ce fait l'ouverture (12) est ouverte.

12. Procédé selon la revendication 11,
**caractérisé en ce que**
le poussoir (3) et/ou l'élément d'étanchéité (5) sont entraînés par la partie de butée (22).

13. Procédé selon la revendication 11 ou 12,
**caractérisé en ce que**
le poussoir (3) est déplacé par la partie de butée (22) au moyen d'une connexion par engagement par correspondance de forme entre la partie de butée (22) et le poussoir (3)
et/ou
l'élément d'étanchéité (5) est déplacé par le poussoir (3) au moyen d'une connexion par engagement par correspondance de forme, par liaison de matière et/ou par force entre le poussoir (3) et l'élément d'étanchéité (5).

14. Soupape électromagnétique selon l'une quelconque ou plusieurs des revendications 1 à 9,
**caractérisée en ce**
**qu'**un procédé selon l'une quelconque ou plusieurs des revendications 11 à 13 peut être réalisé par la soupape (1).
